# EUROPEAN PATENT SPECIFICATION

(11) **EP 1 973 300 B1**
(45) Date of publication and mention of the grant of the patent: **07.07.2010**
(21) Application number: 07104833.4
(22) Date of filing: 23.03.2007
(51) Int. Cl.: H04L 29/08

(54) **Method and system for orchestration of content processing in mobile delivery frameworks**
Verfahren und System zur Orchestrierung der Inhaltsverarbeitung in mobilen Übergaberahmen
Procédé et système d'organisation d'un traitement de contenu dans des structures de livraison mobile

(43) Date of publication of application: 24.09.2008
(60) Divisional application: 10162842.8
(73) Proprietor: Research In Motion Limited, Waterloo, Ontario N2L 3W8 (CA)
(72) Inventor: Shenfield, Michael, Richmond Hill, Ontario L4C 3S9 (CA)
(74) Representative: Moore, Barry

(56) References cited:
- US-A1- 2004 073 613
- US-A1- 2005 240 530
- HENRIK FRYSTYK NIELSEN ET AL: "Web Services Routing Protocol (WS-Routing)" INTERNET CITATION, [Online] 2001, XP002427675 Retrieved from the Internet: URL:http://msdn2.microsoft.com/en-us/libra ry/ms951249.aspx> [retrieved on 2007-04-02]

## Description

The present disclosure relates generally to mobile content delivery and in particular to the utilization of enablers to facilitate mobile content delivery.

The users of mobile devices or mobile user equipment (UE) are increasingly becoming more sophisticated in terms of the functionality that they require from their mobile devices and the way that they access data from the mobile devices.

Dynamic content delivery allows users to have subscribed information or data dynamically delivered to them rather than having to go and seek out the data. Examples of data could include stock quotes, weather updates, traffic updates, dynamic wallpaper, ads, applications or other data desirable to the user.

Content delivery often requires various enablers on both the server side and on the device side. These enablers are not part of the core functionality of a delivery enabler and a system and method is required in order to coordinate content processing with other enablers.

US2004/073613 A1 discloses a method for automatic digital document processing comprising embedding a processing profile with a digital document, and processing the digital document in response to the embedded processing profile.

US2005/240530 A1 discloses a content distribution system, in which a content provider transmits a motion picture content and usage rule metadata to a playback apparatus.

### GENERAL

The present invention defines a method according to claim 1, a system according to claim 15, a content package according to claim 16 and a computer readable medium storing program code according to claim 28. Specific embodiments are set forth in the dependent claims 2-14 and 17-27.

The present system and method may provide for the embedding of external references and content processing coordination rules inside mobile content delivery metadata. In particular, a method is provided for expressing coordination rules for mobile delivery metadata as an XML packaged state chart.

A content provider may embed metadata for various processing elements within the delivery framework. Included in the metadata are instructions for the content delivery enabler. Further, external namespace declarations may be provided for external enablers. Namespaces referring to the XML schemas representing binding to external enablers may be included in order to coordinate processing of mobile content while a content package is being delivered. This is accomplished by embedding elements and attributes defined in corresponding XML schemas within an XML element for the processing state.

Action verbs can be used to map coordination instructions to external enabler functions. This level of indirection allows for low coupling between services.

The present disclosure therefore may provide a method for coordinating content processing in a mobile delivery framework comprising the steps of: embedding, within a metadata envelope associated with content, external references to external enablers and metadata for a delivery enabler; and inserting, into the metadata for a delivery enabler, content processing coordination rules.

The present disclosure may further provide a system for coordination of content processing comprising: a content provider, said content provider adapted to embed external references to external enablers and metadata for a delivery enabler inside mobile content delivery metadata associated with content supplied by said content provider, and to insert into the metadata for a delivery enabler content processing coordination rules in order to engage the functionality of the referenced external enablers for processing the content by the delivery enabler; a content delivery enabler comprising: a delivery server, said delivery server adapted to process metadata directed to said delivery server; and a delivery client, said delivery client adapted to process metadata directed to said delivery client; external enablers adapted to process content based on the content processing coordination rules through said content delivery enabler; and a content client adapted to consume content from the content provider.

The present disclosure may further provide a content package comprising: content; and a metadata envelope, the metadata envelope comprising external references to external enablers and metadata for a delivery enabler, the metadata for a delivery enabler having content processing coordination rules embedded therein.

### BRIEF DESCRIPTION OF THE DRAWINGS

The present disclosure will be better understood with reference to the drawings in which:
**Figure 1** is a block diagram showing logical components within a delivery architecture;
**Figure 2** is a block diagram illustrating flow of metadata between the logical components of **Figure 1****.**
**Figure 3** is a block diagram illustrating an enveloped model for metadata processing between the logical components of **Figure 1****.**
**Figure 4** is a block diagram showing an exemplary content package including content and a metadata envelope;
**Figure 5** is a block diagram showing a function block;
**Figure 6** is a state diagram showing exemplary coordination of metadata between a content delivery enabler and external enablers; and
**Figure 7** is a block diagram showing an exemplary mobile device that can be used in associate with the method and system of the present disclosure.

### DESCRIPTION OF PREFERRED EMBODIMENTS

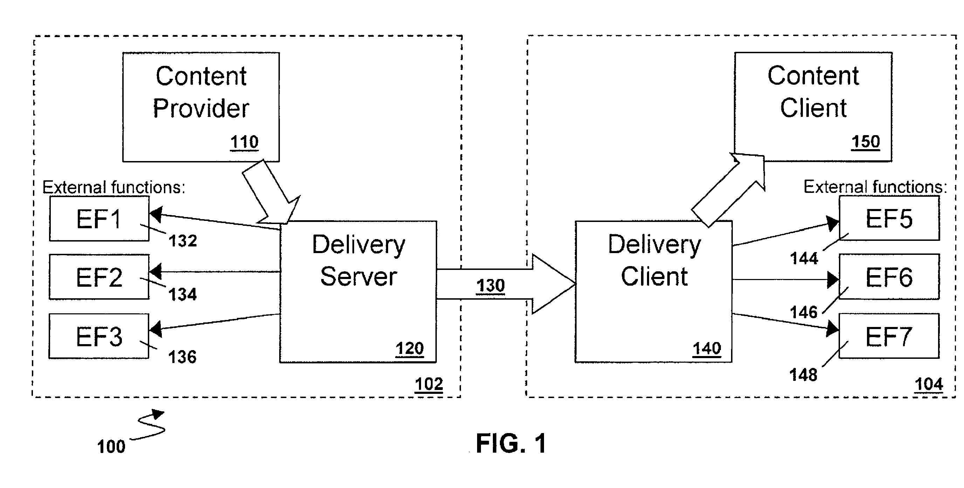

Reference is now made to **Figure 1****.** A push system for delivering dynamic content to a client application is illustrated. The system of **Figure 1** is a simplified system and shows logical components that need to be in a dynamic content delivery architecture. However, as will be appreciated by those skilled in the art, other components could exist or various components could be grouped together.

Architecture **100** includes a content provider **110.** Content provider **110** is arranged to provide dynamic content to users. This can include, for example, a website selling books. Content provider **110** may periodically provide a list of newly released books which can either be sent to subscribers that are subscribed to the website or to a delivery server that manages the subscriptions.

A delivery server **120** communicates over a wireless network **130** with a delivery client **140** that is located on a mobile device in a preferred embodiment. Delivery client **140** receives the content that is being delivered from content provider **110** and can communicate the content with a content client **150.** Content client **150** ultimately consumes the content.

As will be appreciated by those skilled in the art, an enabler in the present disclosure is equivalent to a framework. Thus, the delivery enabler comprises delivery server **120** and delivery client **140.**

As will be appreciated by those skilled in the art, various external functions may be required for the delivery of the content to the content client **150.** These external functions can exist both on the server side **102** and the device side **104.** In **Figure 1****,** the external functions are shown as external functions **132, 134** and **136** on server side **102** and external functions **144, 146** and **148** on device side **104.** Examples of external functions can include but are not limited to presence, location, content screening, and compression, among others.

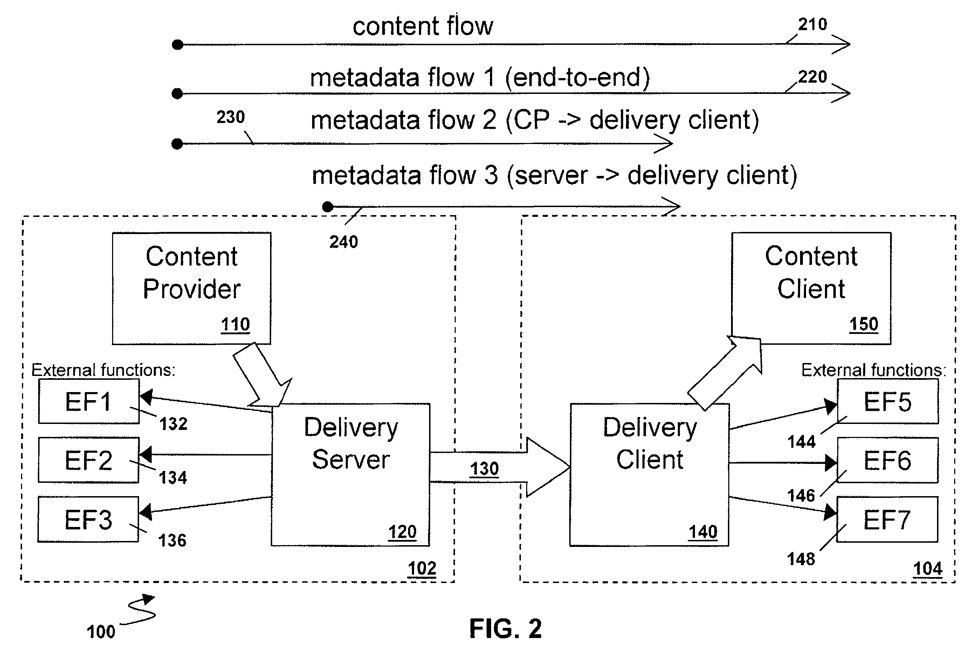

Reference is now made to **Figure 2****.** In order to add intelligence to a system, content is associated with metadata. Metadata, in this case, is defined as data that can be used by a processing element to manipulate the content. As will be appreciated, a generic content delivery system requires metadata to allow various content providers and content clients to exist within the system. The metadata can be in various forms, including processing parameters or rules, or a processing handler, code or reference provided directly or a link to a processing handler, code or rules in another location.

As can be seen in **Figure 2****,** content passes from content provider **110** to content client **150,** as illustrated by arrow **210.** Metadata, which provides instructions to various components within the architecture **100** can also pass between components within architecture **100,** usually along with the content. For example, arrow **220** illustrates metadata for the content client that originates at the content provider **110** and is opaque to the delivery system until it reaches a content client **150.**

Arrow **230** shows metadata created by a content provider **110** that is intended for delivery client **140** and thus only flows to the delivery client **140.**

Arrow **240** illustrates metadata generated by delivery server **120** and is intended for delivery client **140** and thus is first associated with the content at delivery server **120** and stripped from the content at delivery client **140.** Examples of where this could occur include agreements between a user and a service provider regarding a billing plan and the level of service to be provided, where the service provider can use the metadata to limit the services available or provide enhanced services.

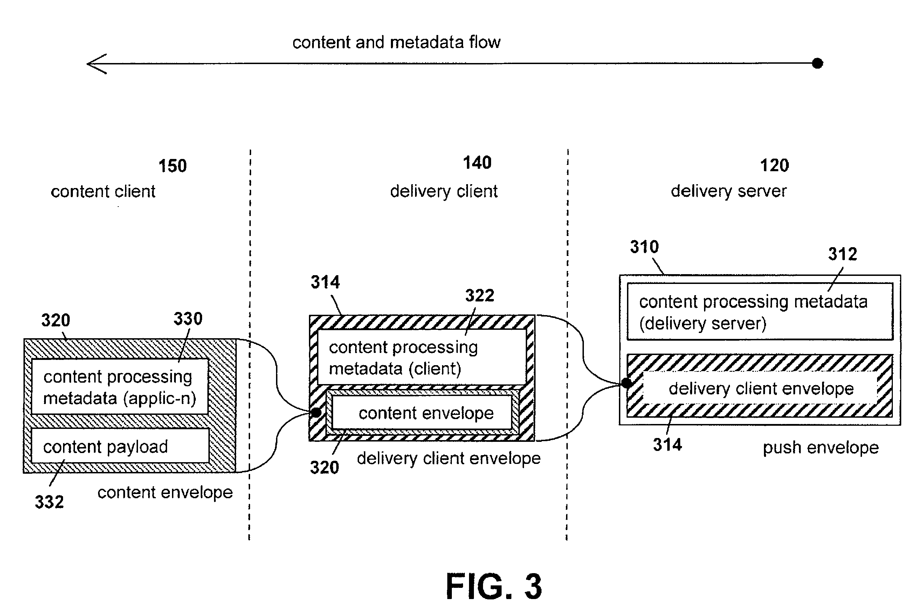

Reference is now made to **Figure 3. Figure 3** illustrates a multilayered envelope model for content metadata.

A delivery server **120** receives a push envelope **310** that includes content processing metadata **312** for the delivery server **120** and a delivery client envelope **314.** The delivery server **120** extracts the content processing metadata **312** and uses this metadata to process delivery client envelope **314.** Metadata **312** dictates to delivery server **120** what to do with the delivery client envelope **314.**

Delivery client envelope **314** is passed to delivery client **140,** where it is broken into a content envelope **320** and a content processing metadata **322.** Content processing metadata **322** is used by delivery client **140** to process the content envelope **320.** For example, this can be used to instruct delivery client **140** to perform a replacement of previously delivered content envelope **320** with the latest envelope if content client **150** is only interested in the latest version of the content.

Content envelope **320** is passed to content client **150.** Content envelope **320** includes content processing metadata **330** for the content client **150** and content payload **332** that is to be consumed by the content client **150.**

As will be appreciate by those skilled in the art, the nesting of envelopes in accordance with **Figure 3** provides for a rich dynamic environment in which processing can occur at any processing element of the architecture and in which the content provider **110** can specify how specific content is to be dealt with. In one embodiment, metadata is directed to a particular logical element and is opaque to other processing elements.

As will further be appreciated, metadata may only be included for various stages of the delivery of content. For example, metadata may only be required between the delivery server **120** and delivery client **140** and thus no metadata for content client **150** would be included.

Other alternatives would be evident to those skilled in the art.

While the above describes metadata for a content delivery enabler, in some cases a mobile content delivery enabler may need to engage other frameworks and enablers while delivering content to a content client **150.** Similarly, a delivery enabler may need to engage other frameworks and enablers while delivering the content to content client **150.** As indicated above, examples of external functions include presence, location, content screening, compression, among others. For example, an external enabler may be a presence enabler. A user may have specified a rule that certain content should only be delivered when the user is in a home network in order to avoid data roaming charges. Such an enabler needs to use the functionality of other enablers such as a location enabler to find where the mobile device is located.

Other examples of enablers include content screening that could prevent certain types of content from being delivered to the mobile device.

On the device side, an example of an enabler may be a compression enabler that would need to decompress certain content before it is passed to a content client **150.**

A content delivery enabler would not typically have the functionality of the external enablers and thus needs to access external enablers to provide for a rich content delivery framework.

As will be appreciated by those skilled in the art, content should be opaque for the delivery framework. The only way to therefore indicate the need for external content processing and to coordinate this processing is through the use of metadata.

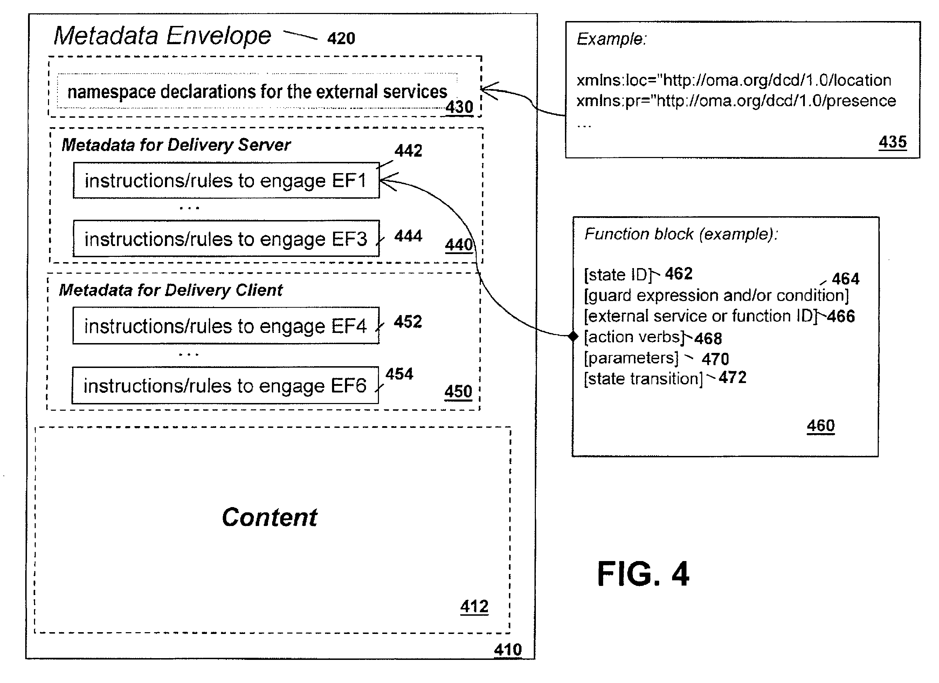

Reference is now made to **Figure 4. Figure 4** illustrates an exemplary content package **410** received from a content provider such as content provider **110** from **Figure 1****.**

Content package **410** includes content **412** and a metadata envelope **420.** As indicated above, content **412** should be opaque for the delivery framework. Therefore, the only way to indicate the need for external content processing, and to co-ordinate this processing, is through the use of the metadata in metadata envelope **420.**

Metadata envelope **420** includes a namespace declaration box **430,** which allows for namespace declarations for external services that are to be used for processing the content **412.** Two exemplary namespace declarations are shown with reference numeral **435.**

Metadata envelope **420** further preferably includes a metadata block **440** for processing by a delivery server such as delivery server **120** from **Figure 1****.**

Metadata block **440** includes various metadata for processing by the delivery server. Metadata block **440** further includes various function blocks to engage external functions. These are illustrated by function blocks **442** and **444** in **Figure 4****.**

Metadata envelope **420** also includes a metadata block **450** for processing by a delivery client such as delivery client **140** from **Figure 1****.** Metadata block **450** includes metadata to be processed by the delivery client along with function blocks **452** and **454.**

As will be appreciated by those skilled in the art, the use of two function blocks to engage external functions in block **450** is merely an example and the present disclosure is not meant to be limited to a certain number of external functions engaged by external function blocks. In other words, metadata block **440** or metadata block **450** could include no instructions or rules to engage external functions and thus no function blocks, or could engage multiple external functions through many function blocks.

An example of a function block, such as function block **442,** is illustrated by reference numeral **460.** Reference numeral **460** points to a logical representation of a function block. In the example of **Figure 4****,** the function block is a node in a state tree.

The function block preferably includes a state identifier **462,** which identifies the state of the function block in state tree.

The function block may further include a guard expression and/or condition **464,** which includes a logical expression that, if satisfied, causes the processing for the state to be performed.

The function block further could include an external service or function identifier **466** to identify the external service or function being utilized.

The function block could further include action verbs **468** defining what function of an external service the content delivery enabler should use.

The function block could further include parameters **470** defining the list of parameters that needed to be passed to the external enabler when the function defined in this function block is invoked.

The function block could further include a state transition **472** based on the results of the action verbs to indicate which state to move to next.

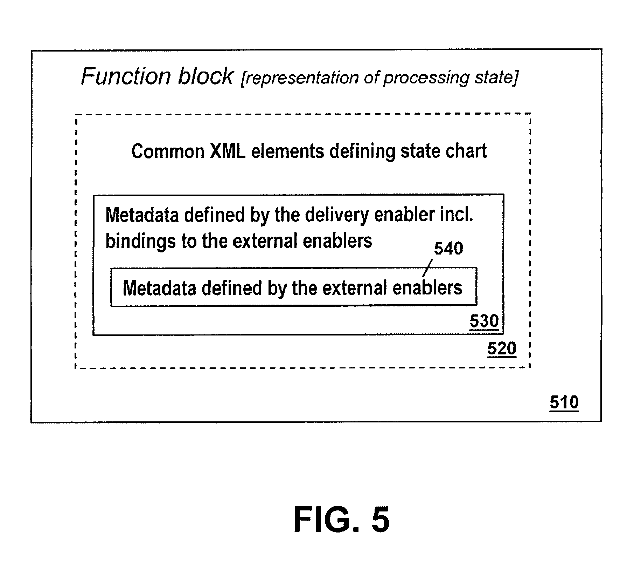

Reference is now made to **Figure 5. Figure 5** illustrates a layered structure of function block **510,** which is a representation of a processing state. Various embedded blocks exist within function block **510** as described below.

A first block **520** is a set of common XML elements defining state chart. As will be appreciated by those skilled in the art, the term "element" is a broad term and includes a subset of an XML document that starts and ends with corresponding XML tags.

Block **520** includes elements that are referenced by the namespace defining XML syntax for a state chart representation language. Examples include state chart extensible markup language (SCXML), business process execution language (BPEL) and XProc, among others.

A further embedded block **530** contains metadata defined by the delivery enabler, including bindings to external enablers. Block **530** includes XML that is referenced by the namespace for the delivery enabler and includes all XML bindings to external enablers and internal processing instructions, if any.

A further embedded block **540** is metadata defined for use by external enablers. This block is referenced by the namespace for the external enabler and includes elements defined in the external enabler schema. These elements are opaque for the delivery enabler.

As will be appreciated by those skilled in the art, the elements within block **530** specify a predefined behavior of the delivery enabler including binding of elements onto functions/parameters of the external enabler. These elements should be understood by the delivery enabler metadata interpretation layer. Conversely, the elements within block **540** are opaque for the delivery enabler and are passed to the external enabler "as is". These elements represent constructs defined by the external enabler schema and therefore are understood by the external enabler.

The above therefore provides a method for using name spaces and schemas representing bindings to external enablers in order to coordinate processing of mobile content while in delivery. This is accomplished by embedding elements defined in corresponding schemas within an XML element for the processing state.

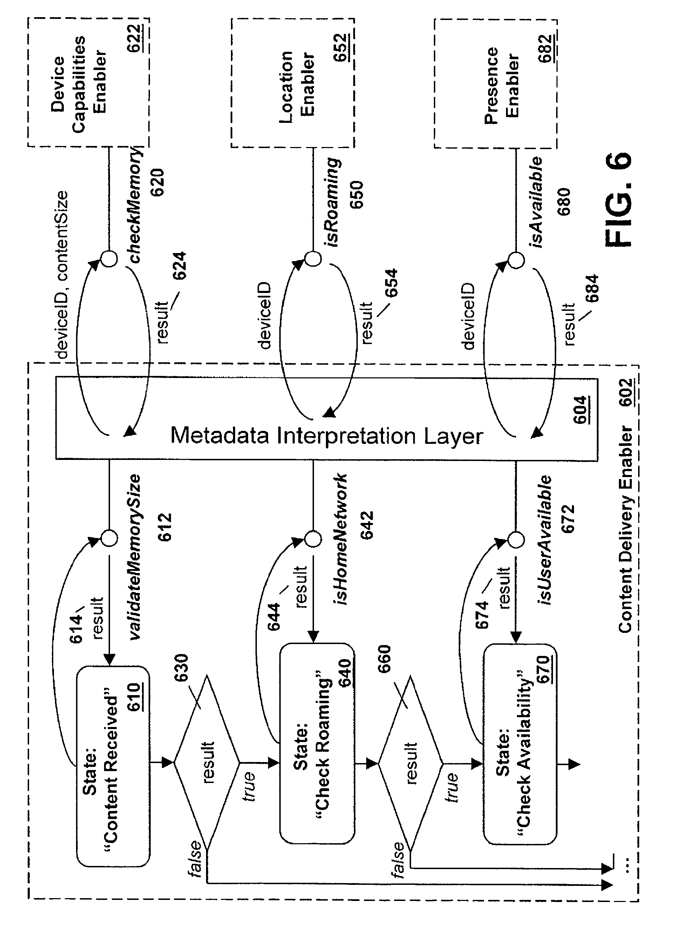

The above will be more clearly understood with reference to the following example SCXML code segment and reference to **Figure 6****.**

The following illustrates an example of co-ordination metadata expressed in SCXML:

```
            <scxml xmlns="http://www.w3.org/2005/07/scxml"
                         xmlns:dcd="http://oma.org/dcd/1.0"
                         xmlns:dp="http://oma.org/dcd/1.0/dcap"
                         xmlns:l="http://xyz.com/location/1.0/"
                         xmlns:p="http://abc.net/presence/1.0/"
                         initialstate="Content Received">
            <state id="Content Received">
               <invoke src="checkMemory">
                   <dcd:action function-id="DCAP:checkMemory">
                         <dcd:verb>validateMemorySize</dc:verb>
                         <dcd:param>ContentHeader:deviceID<dcd:param>
                         <dcd:param>ContentHeader:contentSize<dcd:param>
                         <dp:function>checkMemory</dp:function>
                         <dp:resultType>boolean</dp:resultType>
                   </dcd:action>
               </invoke>
               <transition event="success" cond="checkMemory.result"
            target="Check Roaming"/>
               <transition event="failure" cond="!checkMemory.result"
            target="Check Fragmentation"/>
            </state>
            <state id="Check Roaming">
                   <invoke src="isRoaming">
                     <dcd:action function-id="LOC:isRoaming">
                         <dcd:verb>isHomeNetwork</dcd:verb>
                         <dcd:param>ContentHeader:devicelD<dcd:param>
                         <dcdaomeExoticEIement>"if not in
            Finland"<dcd:someExoticElement>
                         <I:name>isRoaming</I:name>
                         <I:param>"ignoreNetworkAgreements=true"</I:param>
                     </dcd:action>
                </invoke>
                  <transition event="success" cond="isRoaming.result"
            target="Check Availability"/>
                   <transition event="failure" cond="!isRoaming.result"
            target="Send Rejected"/>
            </state>
            <state id="Check Availability">
              <invoke src="isAvailable">
                    <dcd:action function-id="PRES:isAvailable">
                        ...
                    </dcd:action>
            ...
            </scxml>
```

The first five lines of the code segment above are part of block **430** from **Figure 4**. Specifically, these are namespace declarations for the XML version, as well as namespace declarations for the dynamic content delivery, a device capabilities enabler, a device location enabler and a device presence enabler. As will be appreciated, these are merely examples of various enablers that could be used and declared as part of the namespace declarations. Further, the namespaces declarations shown above are merely included as an example and do not represent real URLs for enablers.

The next line of the code indicates 'initialstate = "content received"'. This shows the initial state to proceed to for the content processing.

The next line indicates 'state id = "content received" '. This is part of block **520** of **Figure 5** and defines the state of the function block.

Further, the line 'invoke src = "checkMemory" ' is part of block **520** of **Figure 5** and is telling the SCXML to invoke an external function.

The next line indicates 'dcd:action function-id="DCAP:checkMemory"'. This action defines that the external function checkMemory on the delivery capabilities enabler should be utilized.

The next line is <dcd:verb> validateMemorySize </dcd:verb>. This is an action verb that the dynamic content delivery enabler understands.

The next two lines indicate parameters that the external function checkMemory uses.

The next line is <dp:function>checkMemory</dp:function>. This maps the dcd action verb validateMemorySize to the external function. In this case, the external function is checkMemory and is part of the device capability enabler defined using the name "dp" in the namespace definition.

The next line defines the results type that is expected from the external function.

From the above code segment, the dcd:action, dcd:verb and dcd:parameters belong to block **530** of **Figure 5****.** These are a predefined behavior of the delivery enabler and include binding of the elements onto functions or parameters of the external enabler.

The lines dp:function and dp:result belong to block **540** and are opaque to the dcd enabler.

The line: <transition event="success" cond="checkMemory.result" target="Check Roaming"/> is a check to see whether or not a specific event occurred and a condition has been satisfied. If the event has occurred and the condition has been satisfied, then this line defines the next state to proceed to. In this case, the next state is "Check Roaming".

In the line <transition event="failure" cond="!isRoaming.result" target="Send Rejected"/> the event fails and the check memory returns 'false', then the state proceeds to "Check Fragmentation".

As will be appreciated by those skilled in the art, the transition events defined above belong to block **520** of **Figure 5****.**

Referring to **Figure 6****,** the above is illustrated with reference to the state diagrams. Specifically, the initial state **610** is state: "Content Received". An action verb validateMemorySize is used within content delivery enabler **602** and is interpreted at the metadata interpretation layer **604.**

In metadata interpretation layer **604,** the external function checkMemory **620** is invoked, passing device parameters 'deviceID' and 'contentSize'. Device capabilities enabler **622** then returns a result **624** back to metadata interpretation layer **604,** which then passes the parameter back through the validateMemorySize **612** verb, and the result **614** is passed back into state **610.**

The result **614** is checked at step **630** and if true, the state transitions to "Check Roaming" state **640** and if false, the state transitions to a "Check Fragmentation" state [not shown].

Referring again to the code segment above, a further function block is defined by 'state ID = "check roaming" '.

The action is defined for the dynamic content delivery using function ID "LOC:isRoaming".

The expression <dcd:verb> isHomeNetwork </dcd:verb> provides an action verb. The parameters for the action verb are defined in the next line as ContentHeader:deviceID.

The dynamic content delivery can use any arbitrary elements defined in its schema such as the expression "someExoticElement".

The next two lines, namely:

```
     <I:name>isRoaming</I:name>
     <I:param>"ignoreNetworkAgreements=true" </I:param>
```

define an external function that is mapped to the verb "isHomeNetwork". The external function is the "isRoaming" function and includes a parameter of "ignoreNetworkAgreements". As will be appreciated by those skilled in the art, the location enabler is adapted to handle this function and the function is opaque to the dynamic content delivery enabler.

The next two lines define the transitions. If the "isRoaming" returns a true, then the state transition transitions to a check availability state. If the "is roaming" result is false, then the state transitions to a "Send Rejected" state.

This is illustrated in **Figure 6****.** In **Figure 6****,** the state **640** is the "Check Roaming" state and the action verb **642** "isHomeNetwork" can be used from the state **640.** Metadata interpretation layer **604** interprets the "isHomeNetwork" and uses the action verb to invoke an "isRoaming" function **650** at a location enabler **652.**

Location enabler **652** returns a result **654,** which is propagated through metadata interpretation layer **604** to the "isHomeNetwork" verb **642,** which returns a result **644** to the check roaming state **640.**

The result is then checked at **660,** which corresponds to the "transition" commands in the code above. If the result in **660** is true, the state transitions to state **670** to a "Check Availability" state. Otherwise, the state proceeds to a "Send Rejected" state [not shown].

Similar functionality applies for the state **670.** The action verb in this case is "isUserAvailable". The metadata interpretation layer **604** uses the "isUserAvailable" verb **672** and invokes the "isAvailable" function **680** of presence enabler **682.** A result **684** is returned and is then returned as a result **674** to state **670.** Based on this, a state transition may occur.

The above therefore provides a method for using external action groups to map coordination instructions to external enabler functions. An interpretation layer for mapping action verbs defined in the delivery enabler onto external functions allows low coupling between services.

As will be appreciated by those skilled in the art, the coordination metadata is defined using XML representation of a state diagram such as Harel state, UML state diagram, Petri net, among others. Each state in the diagram corresponds to a function exposed by an external mobile service that could be used to process mobile content while in delivery. External services, frameworks and enablers, such as location, presence, delivery capabilities, user profile, among others, could be used to personalize content delivery and content presentation according to the device and user settings, user location and state. The service could have more than one function exposed.

Functions and services are identified by identifiers that could be a uniform resource identifier (URI), name, a global unique identifier (GUID), a tag, among others.

Guard expressions, action verbs, parameters and results are expressed in terms defined by the schema of the delivery enabler and delivery framework, and/or by the schema of the particular external service. The delivery enabler schema defines XML elements understood by the delivery enabler and includes predefined bindings to external enabler functions and parameters. The schema for the external enabler defines additional parameters that could assist processing of mobile content by the external enabler. These parameters are opaque to the delivery enabler and embedded inside the delivery enabler metadata using an XML schema extension mechanism.

The delivery enabler can be on either the device side or the service side, as indicated above. In a further embodiment, all server functionality may be moved to the device side, and thus only a device side could exist for the delivery enabler.

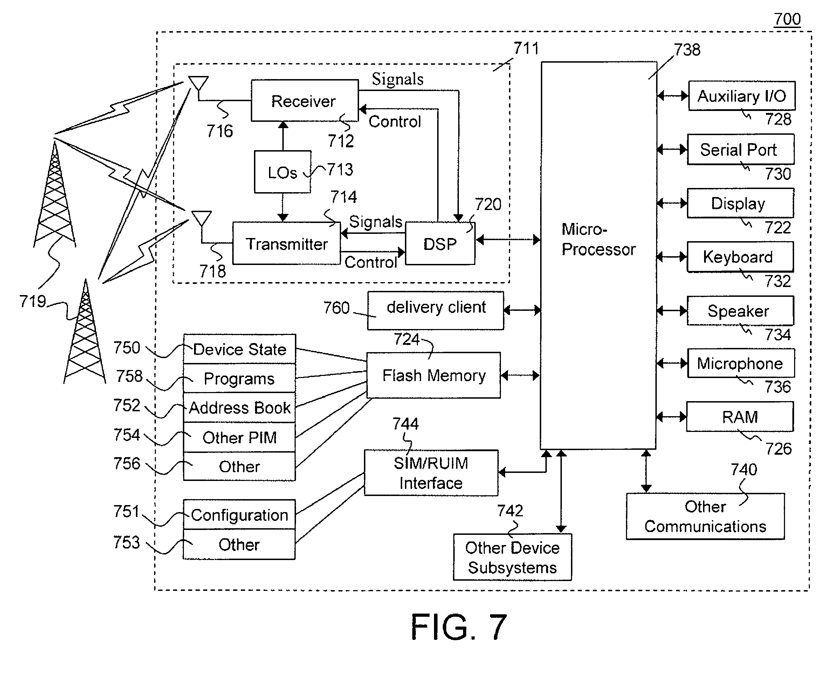

The delivery client and content client can be found on any mobile device. One particular mobile device that is illustrated as an example is provided in **Figure 7****.** Reference is now made to **Figure 7****.**

**Figure 7** is a block diagram illustrating a mobile station apt to be used with preferred embodiments of the apparatus and method of the present application. Mobile station **700** is preferably a two-way wireless communication device having at least voice and data communication capabilities. Mobile station **700** preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile station **700** is enabled for two-way communication, it will incorporate a communication subsystem **711,** including both a receiver **712** and a transmitter **714,** as well as associated components such as one or more, preferably embedded or internal, antenna elements **716** and **718,** local oscillators (LOs) **713,** and a processing module such as a digital signal processor (DSP) **720.** As will be apparent to those skilled in the field of communications, the particular design of the communication subsystem **711** will be dependent upon the communication network in which the device is intended to operate.

Network access requirements will also vary depending upon the type of network **719.** In some CDMA networks network access is associated with a subscriber or user of mobile station **700.** A CDMA mobile station may require a removable user identity module (RUIM) or a subscriber identity module (SIM) card in order to operate on a CDMA network. The SIM/RUIM interface **744** is normally similar to a card-slot into which a SIM/RUIM card can be inserted and ejected like a diskette or PCMCIA card. The SIM/RUIM card can have approximately 64K of memory and hold many key configuration **751,** and other information **753** such as identification, and subscriber related information.

When required network registration or activation procedures have been completed, mobile station **700** may send and receive communication signals over the network **719.** As illustrated in **Figure 7****,** network **719** can consist of multiple base stations communicating with the mobile device. For example, in a hybrid CDMA 1x EVDO system, a CDMA base station and an EVDO base station communicate with the mobile station and the mobile station is connected to both simultaneously. The EVDO and CDMA 1x base stations use different paging slots to communicate with the mobile device.

Signals received by antenna **716** through communication network **719** are input to receiver **712,** which may perform such common receiver functions as signal amplification, frequency down conversion, filtering, channel selection and the like, and in the example system shown in **Figure 7****,** analog to digital (A/D) conversion. A/D conversion of a received signal allows more complex communication functions such as demodulation and decoding to be performed in the DSP **720.** In a similar manner, signals to be transmitted are processed, including modulation and encoding for example, by DSP **720** and input to transmitter **714** for digital to analog conversion, frequency up conversion, filtering, amplification and transmission over the communication network **719** via antenna **718.** DSP **720** not only processes communication signals, but also provides for receiver and transmitter control. For example, the gains applied to communication signals in receiver **712** and transmitter **714** may be adaptively controlled through automatic gain control algorithms implemented in DSP **720.**

Mobile station **700** preferably includes a microprocessor **738** which controls the overall operation of the device. Communication functions, including at least data and voice communications, are performed through communication subsystem **711.** Microprocessor **738** also interacts with further device subsystems such as the display **722,** flash memory **724,** random access memory (RAM) **726,** auxiliary input/output (I/O) subsystems **728,** serial port **730,** one or more keyboards or keypads **732,** speaker **734,** microphone **736,** other communication subsystem **740** such as a short-range communications subsystem and any other device subsystems generally designated as **742.** Serial port **730** could include a USB port or other port known to those in the art.

Some of the subsystems shown in **Figure 7** perform communication-related functions, whereas other subsystems may provide "resident" or on-device functions. Notably, some subsystems, such as keyboard **732** and display **722,** for example, may be used for both communication-related functions, such as entering a text message for transmission over a communication network, and device-resident functions such as a calculator or task list.

Operating system software used by the microprocessor **738** is preferably stored in a persistent store such as flash memory **724,** which may instead be a read-only memory (ROM) or similar storage element (not shown). Those skilled in the art will appreciate that the operating system, specific device applications, or parts thereof, may be temporarily loaded into a volatile memory such as RAM **726.** Received communication signals may also be stored in RAM **726.**

As shown, flash memory **724** can be segregated into different areas for both computer programs **758** and program data storage **750, 752, 754** and **756.** These different storage types indicate that each program can allocate a portion of flash memory **724** for their own data storage requirements. Microprocessor **738,** in addition to its operating system functions, preferably enables execution of software applications on the mobile station. A predetermined set of applications that control basic operations, including at least data and voice communication applications for example, will normally be installed on mobile station **700** during manufacturing. Other applications could be installed subsequently or dynamically.

A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network **719.** In a preferred embodiment, the PIM data items are seamlessly integrated, synchronized and updated, via the wireless network **719,** with the mobile station user's corresponding data items stored or associated with a host computer system. Further applications may also be loaded onto the mobile station **700** through the network **719,** an auxiliary I/O subsystem **728,** serial port **730,** short-range communications subsystem **740** or any other suitable subsystem **742,** and installed by a user in the RAM **726** or preferably a non-volatile store (not shown) for execution by the microprocessor **738.** Such flexibility in application installation increases the functionality of the device and may provide enhanced on-device functions, communication-related functions, or both. For example, secure communication applications may enable electronic commerce functions and other such financial transactions to be performed using the mobile station **700.**

In a data communication mode, a received signal such as a text message or web page download will be processed by the communication subsystem **711** and input to the microprocessor **738,** which preferably further processes the received signal for output to the display **722,** or alternatively to an auxiliary I/O device **728.** A delivery client **760,** which could be equivalent to delivery client **140** could also process the input.

A user of mobile station **700** may also compose data items such as email messages for example, using the keyboard **732,** which is preferably a complete alphanumeric keyboard or telephone-type keypad, in conjunction with the display **722** and possibly an auxiliary I/O device **728.** Such composed items may then be transmitted over a communication network through the communication subsystem **711.**

For voice communications, overall operation of mobile station **700** is similar, except that received signals would preferably be output to a speaker **734** and signals for transmission would be generated by a microphone **736.** Alternative voice or audio I/O subsystems, such as a voice message recording subsystem, may also be implemented on mobile station **700.** Although voice or audio signal output is preferably accomplished primarily through the speaker **734,** display **722** may also be used to provide an indication of the identity of a calling party, the duration of a voice call, or other voice call related information for example.

Serial port **730** in **Figure 7****,** would normally be implemented in a personal digital assistant (PDA)-type mobile station for which synchronization with a user's desktop computer (not shown) may be desirable, but is an optional device component. Such a port **730** would enable a user to set preferences through an external device or software application and would extend the capabilities of mobile station **700** by providing for information or software downloads to mobile station **700** other than through a wireless communication network. The alternate download path may for example be used to load an encryption key onto the device through a direct and thus reliable and trusted connection to thereby enable secure device communication. As will be appreciated by those skilled in the art, serial port **730** can further be used to connect the mobile device to a computer to act as a modem.

Other communications subsystems **740,** such as a short-range communications subsystem, is a further optional component which may provide for communication between mobile station **700** and different systems or devices, which need not necessarily be similar devices. For example, the subsystem **740** may include an infrared device and associated circuits and components or a Bluetooth^{™} communication module to provide for communication with similarly enabled systems and devices.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method for coordinating content processing in a mobile delivery framework comprising the steps of:
embedding, within a metadata envelope (420) associated with content (412), external references to external enablers and metadata (440) for a delivery enabler; and
inserting, into the metadata (440) for a delivery enabler, content processing coordination rules in order to engage the functionality of the referenced external enablers for processing the content by the delivery enabler.

2. The method of claim 1, wherein the content processing coordinating rules are an extensible mark-up language 'XML' packaged state chart.

3. The method of claim 2, wherein the XML packaged state chart comprises a function block (510) with embedded layers.

4. The method of claim 3, wherein the embedded layers comprise a first layer (520) defining common XML elements; a second layer (530) defining metadata for a delivery enabler having bindings to external enablers; and a third layer (540) defining metadata for external enablers.

5. The method of claim 4, wherein the third layer (540) is opaque to the delivery enabler.

6. The method of claim 4 or claim 5, wherein the second layer (530) comprises expressions, instructions or parameters having a predefined behaviour comprising binding of the expressions, instructions or parameters onto functions of the external enabler.

7. The method of any one of claims 4 to 6, wherein the first layer (520) is referenced by a namespace defining XML syntax for a state chart representation language.

8. The method of any one of claims 3 to 7, wherein the function block (510) contains any one or any combination of: a state identifier; a guard expression; an external service identifier; an action verb; a parameter; and/or a state transition.

9. The method of claim 8, wherein the action verb is used to map coordination instructions to enabler functions.

10. The method of claim 9, wherein the mapping is performed by a metadata interpretation layer.

11. The method of any one of claims 8 to 10, wherein the state transition is based on a result received from using an action verb to invoke an external function.

12. The method of any one of claims 1 to 11, wherein the external references are namespace declarations for external services.

13. The method of claim 12, wherein the external services comprise any of a presence service, a location service, a content screening service, and/or a compression service.

14. The method of any one of claims 1 to 13, wherein said inserting step defines schemas for external enablers within an element for a processing state.

15. A system for coordination of content processing comprising:
a content provider (110), said content provider (110) adapted to embed external references to external enablers and metadata for a delivery enabler inside mobile content delivery metadata associated with content (332) supplied by said content provider (110), and to insert into the metadata for a delivery enabler content processing coordination rules in order to engage the functionality of the referenced external enablers for processing the content by the delivery enabler;
a content delivery enabler comprising:
a delivery server (120), said delivery server (120) adapted to process metadata (312) directed to said delivery server (120); and
a delivery client (140), said delivery client (140) adapted to process metadata (314) directed to said delivery client (140);
external enablers adapted to process content based on the content processing coordination rules through said content delivery enabler; and
a content client (150) adapted to consume content from the content provider (110).

16. A content package comprising:
content (412); and
a metadata envelope (420), the metadata envelope (420) comprising external references to external enablers and metadata (440) for a delivery enabler, the metadata (440) for a delivery enabler having content processing coordination rules embedded therein in order to engage the functionality of the referenced external enablers for processing the content by the delivery enabler.

17. The content package of claim 16, wherein the content processing coordinating rules are an extensible mark-up language 'XML' packaged state chart.

18. The content package of claim 17, wherein the XML packaged state chart comprises a function block (510) with embedded layers.

19. The content package of claim 18, wherein the embedded layers comprise a first layer (520) defining common XML elements; a second layer (530) defining metadata for a delivery enabler having bindings to external enablers; and a third layer (540) defining metadata for external enablers.

20. The content package of claim 19, wherein the third layer (540) is opaque to the delivery enabler.

21. The content package of claim 19 or claim 20, wherein the second layer (530) comprises expressions, instructions or parameters having a predefined behaviour comprising binding of the expressions, instructions or parameters onto functions of the external enabler.

22. The content package of any one of claims 19 to 21, wherein the first layer (520) is referenced by a namespace defining XML syntax for a state chart representation language.

23. The content package of any one of claims 18 to 22, wherein the function block (510) contains any one or any combination of: a state identifier; a guard expression; an external service identifier; an action verb; a parameter; and/or a state transition.

24. The content package of claim 23, wherein the action verb is adapted to be used to map coordination instructions to enabler functions.

25. The content package of any one of claims 16 to 24, wherein the external references are namespace declarations for external services.

26. The content package of claim 25, wherein the external services comprise any of a presence service, a location service, a content screening service, and/or a compression service.

27. The content package of any one of claims 16 to 26, further comprising schemas for external enablers within an element for a processing state.

28. A computer readable medium storing program code for causing a computing device to perform the steps of the method of any one of claims 1 to 14.

## Patentansprüche

1. Verfahren zum Koordinieren einer Inhaltsverarbeitung in einem mobilen Lieferungs-Framework, das die Schritte aufweist:
Einbetten, in einen Metadatenumschlag (420), der zu dem Inhalt (412) gehört, von externen Referenzen zu externen Ermöglichern und Metadaten (440) für einen Lieferungsermöglicher; und
Einfügen, in die Metadaten (440) für einen Lieferungsermöglicher, von Inhaltverarbeitungskoordinationsregeln, um die Funktionalität der referenzierten externen Ermöglicher zur Verarbeitung des Inhalts durch den Lieferungsermöglicher einzusetzen.

2. Verfahren gemäß Anspruch 1, wobei die Inhaltverarbeitungskoordinationsregeln ein XML(extensible mark-up language)-verpacktes Zustandsdiagramm sind.

3. Verfahren gemäß Anspruch 2, wobei das XML-verpackte Zustandsdiagramm einen Funktionsblock (510) mit eingebetteten Schichten aufweist.

4. Verfahren gemäß Anspruch 3, wobei die eingebetteten Schichten eine erste Schicht (520) aufweisen, die allgemeine XML-Elemente definiert; eine zweite Schicht (530), die Metadaten für einen Lieferungsermöglicher definiert, mit Verbindungen zu externen Ermöglichern; und eine dritte Schicht (540), die Metadaten für externe Ermöglicher definiert.

5. Verfahren gemäß Anspruch 4, wobei die dritte Schicht (540) für den Lieferungsermöglicher opak ist.

6. Verfahren gemäß Anspruch 4 oder Anspruch 5, wobei die zweite Schicht (530) Ausdrücke, Anweisungen oder Parameter aufweist, die ein vordefiniertes Verhalten haben, welches das Verbinden der Ausdrücke, Anweisungen oder Parameter auf Funktionen des externen Ermöglichers aufweist.

7. Verfahren gemäß einem der Ansprüche 4 bis 6, wobei die erste Schicht (520) durch eine Namensraum-definierende XML-Syntax für eine Zustandsdiagramm-Repräsentationssprache referenziert ist.

8. Verfahren gemäß einem der Ansprüche 3 bis 7, wobei der Funktionsblock (510) einen oder jede Kombination enthält aus: ein Zustandsidentifizierer; ein Schutzausdruck; ein externer Dienstidentifizierer; ein Aktionsverb; ein Parameter; und/oder ein Zustandsübergang.

9. Verfahren gemäß Anspruch 8, wobei das Aktionsverb verwendet wird, um Koordinationsanweisungen zu Ermöglicher-Funktionen abzubilden.

10. Verfahren gemäß Anspruch 9, wobei die Abbildung durch eine Metadaten-Interpretationsschicht durchgeführt wird.

11. Verfahren gemäß einem der Ansprüche 8 bis 10, wobei der Zustandsübergang auf einem Ergebnis basiert, das von einer Verwendung eines Aktionsverbs empfangen wird, um eine externe Funktion hervorzurufen.

12. Verfahren gemäß einem der Ansprüche 1 bis 11, wobei die externen Referenzen Namensraum-Angaben für externe Dienste sind.

13. Verfahren gemäß Anspruch 12, wobei die externen Dienste einen aufweisen aus einem Präsenz-Dienst, einem Orts-Dienst, einem Inhalt-Abtasten-Dienst und/oder einem Komprimierungs-Dienst.

14. Verfahren gemäß einem der Ansprüche 1 bis 13, wobei der Schritt des Einfügens Schemas für externe Ermöglicher in einem Element für einen Verarbeitungszustand definiert.

15. System zum Koordinieren einer Inhaltsverarbeitung, das aufweist:
einen Inhalt-Anbieter (110), wobei der Inhalt-Anbieter(110) ausgebildet ist, externe Referenzen zu externen Ermöglichern und Metadaten für einen Lieferungsermöglicher in mobile Inhalt-Lieferungs-Metadaten einzubetten,
die zu Inhalt (332) gehören, der durch den Inhalt-Anbieter (110) geliefert wird, und in die Metadaten für einen Lieferungsermöglicher Inhaltverarbeitungskoordinationsregeln einzufügen, um die Funktionalität der referenzierten externen Ermöglicher zur Verarbeitung des Inhalts durch den Lieferungsermöglicher einzusetzen;
einen Inhalt-Lieferungsermöglicher, der aufweist:
einen Lieferungs-Server (120), wobei der Lieferungs-Server (120) ausgebildet ist, Metadaten (312) zu verarbeiten, die an den Lieferungs-Server (120) gerichtet sind; und
einen Lieferungs-Client (140), wobei der Lieferungs-Client (140) ausgebildet ist, Metadaten (314) zu verarbeiten, die an den Lieferungs-Client (140) gerichtet sind;
externe Ermöglicher, die ausgebildet sind, Inhalt basierend auf den Inhaltverarbeitungskoordinationsregeln durch den Inhalt-Lieferungsermöglicher zu verarbeiten; und
einen Inhalt-Client (150), der ausgebildet ist, Inhalt von dem Inhalt-Anbieter (110) zu konsumieren.

16. Inhaltspaket, das aufweist:
Inhalt (412); und
einen Metadatenumschlag (420), wobei der Metadatenumschlag (420) externe Referenzen zu externen Ermöglichern und Metadaten (440) für einen Lieferungsermöglicher aufweist, wobei die Metadaten (440) für einen Lieferungsermöglicher Inhaltverarbeitungskoordinationsregeln darin eingebettet haben, um die Funktionalität der referenzierten externen Ermöglicher zur Verarbeitung des Inhalts durch den Lieferungsermöglicher einzusetzen.

17. Inhaltspaket gemäß Anspruch 16, wobei die Inhaltverarbeitungskoordinationsregeln ein XML(extensible mark-up language)-verpacktes Zustandsdiagramm sind.

18. Inhaltspaket gemäß Anspruch 17, wobei das XML-verpackte Zustandsdiagramm einen Funktionsblock (510) mit eingebetteten Schichten aufweist.

19. Inhaltspaket gemäß Anspruch 18, wobei die eingebetteten Schichten eine erste Schicht (520) aufweisen, die allgemeine XML-Elemente definiert; eine zweite Schicht (530), die Metadaten für einen Lieferungsermöglicher definiert, mit Verbindungen zu externen Ermöglichern; und eine dritte Schicht (540), die Metadaten für externe Ermöglicher definiert.

20. Inhaltspaket gemäß Anspruch 19, wobei die dritte Schicht (540) für den Lieferungsermöglicher opak ist.

21. Inhaltspaket gemäß Anspruch 19 oder Anspruch 20, wobei die zweite Schicht (530) Ausdrücke, Anweisungen oder Parameter aufweist, die ein vordefiniertes Verhalten haben, das Verbinden der Ausdrücke, Anweisungen oder Parameter auf Funktionen des externen Ermöglichers aufweist.

22. Inhaltspaket gemäß einem der Ansprüche 19 bis 21, wobei die erste Schicht (520) durch eine Namensraum-definierende XML-Syntax für eine Zustandsdiagramm-Repräsentationssprache referenziert ist.

23. Verfahren gemäß einem der Ansprüche 18 bis 22, wobei der Funktionsblock (510) einen oder jede Kombination enthält aus: ein Zustandsidentifizierer; ein Schutzausdruck; ein externer Dienstidentifizierer; ein Aktionsverb; ein Parameter; und/oder ein Zustandsübergang.

24. Inhaltspaket gemäß Anspruch 23, wobei das Aktionsverb ausgebildet ist, verwendet zu werden, um Koordinationsanweisungen zu Ermöglicher-Funktionen abzubilden.

25. Inhaltspaket gemäß einem der Ansprüche 16 bis 24, wobei die externen Referenzen Namensraum-Angaben für externe Dienste sind.

26. Inhaltspaket gemäß Anspruch 25, wobei die externen Dienste einen aufweisen aus einem Präsenz-Dienst, einem Orts-Dienst, einem Inhalt-Abtasten-Dienst und/oder einem Komprimierungs-Dienst.

27. Inhaltspaket gemäß einem der Ansprüche 16 bis 26, das weiter aufweist Schemas für externe Ermöglicher in einem Element für einen Verarbeitungszustand.

28. Computerlesbares Medium zum Speichern von Programmcode, um eine Computervorrichtung zu veranlassen, die Schritte des Verfahrens gemäß einem der Ansprüche 1 bis 14 durchzuführen.

## Revendications

1. Procédé pour coordonner un traitement de contenu dans une structure de livraison mobile comprenant les étapes qui consistent à :
intégrer, dans une enveloppe (420) de métadonnées associée à un contenu (412), des références externes à des facilitateurs externes et des métadonnées (440) pour un facilitateur de livraison ; et
insérer, dans les métadonnées (440) pour un facilitateur de livraison, des règles de coordination de traitement de contenu afin d'engager la fonctionnalité des facilitateurs externes référencés pour traiter le contenu par le facilitateur de livraison.

2. Procédé de la revendication 1, dans lequel les règles de coordination de traitement de contenu consistent en un diagramme d'états prêt à l'emploi de langage de balisage extensible 'XML'.

3. Procédé de la revendication 2, dans lequel le diagramme d'états prêt à l'emploi 'XML' comprend un bloc de fonction (510) avec des couches intégrées.

4. Procédé de la revendication 3, dans lequel les couches intégrées comprennent une première couche (520) définissant des éléments XML communs; une deuxième couche (530) définissant des métadonnées pour un facilitateur de livraison ayant des liaisons à des facilitateurs externes; et une troisième couche (540) définissant des métadonnées pour des facilitateurs externes.

5. Procédé de la revendication 4, dans lequel la troisième couche (540) est opaque pour le facilitateur de livraison.

6. Procédé de la revendication 4 ou de la revendication 5, dans lequel la deuxième couche (530) comprend des expressions, des instructions ou des paramètres ayant un comportement prédéfini comprenant une liaison des expressions, des instructions ou des paramètres à des fonctions du facilitateur externe.

7. Procédé de l'une quelconque des revendications 4 à 6, dans lequel la première couche (520) est référencée par une syntaxe XML définissant un espace de nommage pour un langage de représentation de diagramme d'états.

8. Procédé de l'une quelconque des revendications 3 à 7, dans lequel le bloc de fonction (510) contient tout élément ou toute combinaison: d'un identifiant d'états; d'une expression de garde; d'un identifiant de services externes; d'un verbe d'action; d'un paramètre; et/ou d'une transition d'états.

9. Procédé de la revendication 8, dans lequel le verbe d'action est utilisé pour mettre en correspondance des instructions de coordination avec des fonctions de facilitateur.

10. Procédé de la revendication 9, dans lequel la mise en correspondance est effectuée par une couche d'interprétation de métadonnées.

11. Procédé de l'une quelconque des revendications 8 à 10, dans lequel la transition d'états est basée sur un résultat reçu par l'utilisation d'un verbe d'action pour invoquer une fonction externe.

12. Procédé de l'une quelconque des revendications 1 à 11, dans lequel les références externes sont des déclarations d'espace de noms pour des services externes.

13. Procédé de la revendication 12, dans lequel les services externes comprennent l'un quelconque d'un service de présence, d'un service d'emplacement, d'un service de filtrage de contenu, et/ou d'un service de compression.

14. Procédé de l'une quelconque des revendications 1 à 13, dans lequel ladite étape d'insertion définit des schémas pour des facilitateurs externes dans un élément pour un état de traitement.

15. Système pour la coordination d'un traitement de contenu comprenant :
un fournisseur (110) de contenu, ledit fournisseur (110) de contenu adapté pour intégrer des références externes à des facilitateurs externes et des métadonnées pour un facilitateur de livraison dans des métadonnées de livraison de contenu mobile associées à un contenu (332) fourni par ledit fournisseur (110) de contenu, et pour insérer dans les métadonnées des règles de coordination de traitement de contenu pour un facilitateur de livraison afin d'engager la fonctionnalité des facilitateurs externes référencés pour traiter le contenu par le facilitateur de livraison ;
un facilitateur de livraison de contenu comprenant :
un serveur de livraison (120), ledit serveur de livraison (120) adapté pour traiter des métadonnées (312) dirigées vers ledit serveur de livraison (120) ; et
un client de livraison (140), ledit client de livraison (140) adapté pour traiter des métadonnées (314) dirigées vers ledit client de livraison (140) ;
des facilitateurs externes adaptés pour traiter un contenu sur la base des règles de coordination de traitement de contenu à travers ledit facilitateur de livraison de contenu ; et
un client (150) de contenu adapté pour consommer un contenu provenant du fournisseur (110) de contenu.

16. Lot de contenu comprenant :
un contenu (412) ; et
une enveloppe (420) de métadonnées, l'enveloppe (420) de métadonnées comprenant des références externes à des facilitateurs externes et des métadonnées (440) pour un facilitateur de livraison, les métadonnées (440) pour un facilitateur de livraison ayant des règles de coordination de traitement de contenu qui y sont intégrées afin d'engager la fonctionnalité des facilitateurs externes référencés pour traiter le contenu par le facilitateur de livraison.

17. Lot de contenu de la revendication 16, dans lequel les règles de coordination de traitement de contenu consistent en un diagramme d'états prêt à l'emploi de langage de balisage extensible "XML".

18. Lot de contenu de la revendication 17, dans lequel le diagramme d'états prêt à l'emploi XML comprend un bloc de fonction (510) avec des couches intégrées.

19. Lot de contenu de la revendication 18, dans lequel les couches intégrées comprennent une première couche (520) définissant des éléments XML communs ; une deuxième couche (530) définissant des métadonnées pour un facilitateur de livraison ayant des liaisons à des facilitateurs externes; et une troisième couche (540) définissant des métadonnées pour des facilitateurs externes.

20. Lot de contenu de la revendication 19, dans lequel la troisième couche (540) est opaque pour le facilitateur de livraison.

21. Lot de contenu de la revendication 19 ou de la revendication 20, dans lequel la deuxième couche (530) comprend des expressions, des instructions ou des paramètres ayant un comportement prédéfini comprenant une liaison des expressions, des instructions ou des paramètres à des fonctions du facilitateur externe.

22. Lot de contenu de l'une quelconque des revendications 19 à 21, dans lequel la première couche (520) est référencée par une syntaxe XML définissant un espace de nommage pour un langage de représentation de diagramme d'états.

23. Lot de contenu de l'une quelconque des revendications 18 à 22, dans lequel le bloc de fonction (510) contient tout élément ou toute combinaison : d'un identifiant d'états; d'une expression de garde ; d'un identifiant de service externe; d'un verbe d'action ; d'un paramètre; et/ou d'une transition d'états.

24. Lot de contenu de la revendication 23, dans lequel le verbe d'action est adapté pour être utilisé pour mettre en correspondance des instructions de coordination avec des fonctions de facilitateur.

25. Lot de contenu de l'une quelconque des revendications 16 à 24, dans lequel les références externes sont des déclarations d'espace de noms pour des services externes.

26. Lot de contenu de la revendication 25, dans lequel les services externes comprennent l'un d'un service de présence, d'un service d'emplacement, d'un service de filtrage de contenu, et/ou d'un service de compression.

27. Lot de contenu de l'une quelconque des revendications 16 à 26, comprenant en outre des schémas pour des facilitateurs externes dans un élément pour un état de traitement.

28. Support lisible par ordinateur stockant un code de programme destiné à amener un dispositif informatique à effectuer les étapes du procédé de l'une quelconque des revendications 1 à 14.
